(19)

Europäisches
Patentamt
European
Patent Office
Office européen
des brevets

(11) **EP 3 965 249 A1**

(12) **EUROPEAN PATENT APPLICATION**
published in accordance with Art. 153(4) EPC

(43) Date of publication:
**09.03.2022 Bulletin 2022/10**

(21) Application number: **20883310.3**

(22) Date of filing: **29.05.2020**

(51) International Patent Classification (IPC):
***H02J 3/38*** *(2006.01)*

(52) Cooperative Patent Classification (CPC):
**H02J 3/28; H02J 3/38**

(86) International application number:
**PCT/CN2020/093091**

(87) International publication number:
**WO 2021/082423 (06.05.2021 Gazette 2021/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.10.2019 CN 201911031338**

(71) Applicant: **Sungrow Power Supply Co., Ltd.
Hefei, Anhui 230088 (CN)**

(72) Inventors:
• **GU, Yu
Hefei, Anhui 230088 (CN)**
• **LI, Jiangsong
Hefei, Anhui 230088 (CN)**
• **XU, Jun
Hefei, Anhui 230088 (CN)**
• **WANG, Tengfei
Hefei, Anhui 230088 (CN)**

(74) Representative: **Rooney, John-Paul
Withers & Rogers LLP
2 London Bridge
London SE1 9RA (GB)**

(54) **DIRECT-CURRENT COUPLING HYDROGEN PRODUCTION SYSTEM AND CONTROL METHOD THEREFOR**

(57)     The present invention provides a direct-current coupling hydrogen production system and a control method therefor. A first converter supplies hydrogen production electric energy to a hydrogen production tank system only when output electric energy of a new energy system of the hydrogen production system is greater than a preset threshold; and a second converter performs grid-connected output by means of a conversion device when the output electric energy of the new energy system is less than or equal to the preset threshold. Therefore, even if a hydrogen production tank of the hydrogen production tank system of the hydrogen production system is a lye electrolytic cell, by means of the principle above, new energy power can be utilized to the maximum, and the minimum current/voltage restriction requirements of the lye electrolytic cell can be met, without introducing battery energy storage, thereby avoiding the problem of poor economy caused by the setting of battery energy storage.

**Figure 2**

Printed by Jouve, 75001 PARIS (FR)

**Description**

This application claims the priority to Chinese Patent Application No. 201911031338.2 titled "DIRECT-CURRENT COUPLING HYDROGEN PRODUCTION SYSTEM AND CONTROL METHOD THEREFOR", filed on October 28, 2019 with the China National Intellectual Property Administration, which is incorporated herein by reference in its entirety.

**FIELD**

The present disclosure relates to the technical field of automatic control, and in particular to a direct-current coupling hydrogen production system and a method for controlling the direct-current coupling hydrogen production system.

**BACKGROUND**

With the development of energy towards being green and clean, hydrogen is regarded as one of the most promising clean energy, since hydrogen is produced from water with true zero emission and no pollution, and is increasingly widely used in industries such as fuel cell, energy storage and new energy vehicles. Water-electrolytic hydrogen making has advantages of high purity, high efficiency and less carbon emission, and thus stands out among various hydrogen production methods.

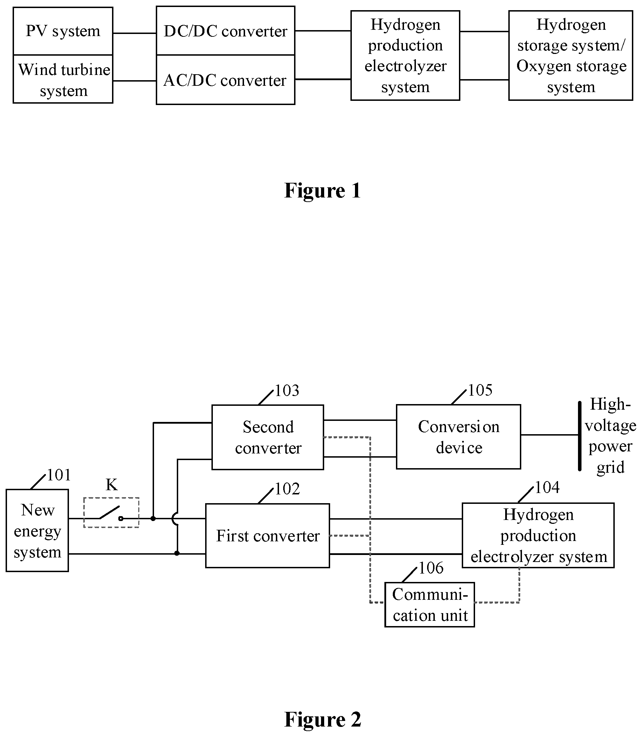

Figure 1 shows a typical direct-current coupling grid-disconnected hydrogen production system. Direct-current power generated by a PV system is outputted through a DC/DC converter (or alternating-current power generated by a wind turbine system is outputted through an AC/DC converter) to multiple hydrogen production electrolyzer systems for an electrolyzer in each of the hydrogen production electrolyzer systems to electrolyze water to obtain hydrogen, and for respectively transmitting acquired hydrogen and oxygen to a hydrogen storage system and an oxygen storage system.

In practices, in the hydrogen production electrolyzer system, an alkaline electrolyzer is commonly used for electrolytic hydrogen production. The alkaline electrolyzer has minimum current/voltage limits, but new energy power is unstable. If the limit is not reached, the alkaline electrolyzer produces gas with a low purity and may actively stop operating, which may even cause accidents. If battery is introduced for energy storage to achieve maximum utilization of the new energy power and overcome the minimum current/voltage limits of the alkaline electrolyzer, the cost is significantly increased, resulting in poor system economy.

**SUMMARY**

In view of this, a direct-current coupling hydrogen production system and a method for controlling the direct-current coupling hydrogen production system are provided according to the present disclosure, to solve the problem of poor system economy caused by the arrangement of the battery energy storage according to the conventional technology.

In order to achieve the above objective, the following technical solutions are provided according to the present disclosure.

In a first aspect of the present disclosure, a direct-current coupling hydrogen production system is provided, which includes a new energy system, a first converter, a hydrogen production electrolyzer system, a second converter, a conversion device and a communication unit.

The new energy system is connected with the hydrogen production electrolyzer system through the first converter, and the new energy system is connected with a power grid successively through the second converter and the conversion device.

The communication unit is in communication connection with the first converter, the second converter and the hydrogen production electrolyzer system.

The first converter is configured to provide, in a case that power outputted from the new energy system is greater than a preset threshold, power to the hydrogen production electrolyzer system for hydrogen production.

The second converter is configured to, in a case that the power outputted from the new energy system is less than or equal to the preset threshold, be connected with the power grid through the conversion device and transmit the power outputted from the new energy system to the power grid.

In an embodiment, a hydrogen production electrolyzer of the hydrogen production electrolyzer system is any one of an alkaline electrolyzer, a PEM electrolyzer and a solid oxide electrolyzer; and

in a case that the hydrogen production electrolyzer in the hydrogen production electrolyzer system is the alkaline electrolyzer, the preset threshold is a minimum required power of the alkaline electrolyzer.

In an embodiment, the second converter is a bidirectional converter, the conversion device is a bidirectional conversion device, and a power output branch of the new energy system is further provided with a controllable switch.

The controllable switch is configured to be turned off in a case that the power outputted from the new energy system is less than or equal to a starting threshold and a current time instant is within a valley price period of the power grid, and to be turned on in cases other than the case that the power outputted from the new energy system is less than or equal to the starting threshold and the current time instant is within the valley price period of the power grid.

The second converter is further configured to receive power from the power grid through the conversion device, and inversely convert the power from the power grid in the case that the power outputted from the new energy system is less than or equal to the starting threshold and the current time instant is within the valley price period of the power grid.

The first converter is further configured to receive power from the second converter and provide power to the hydrogen production electrolyzer system for hydrogen production in the case that the power outputted from the new energy system is less than or equal to the starting threshold and the current time instant is within the valley price period of the power grid.

In an embodiment, the first converter and the second converter operate in a master-slave manner; or the direct-current coupling hydrogen production system further includes a system controller connected with the communication unit, and the system controller is configured to control the direct-current coupling hydrogen production system in a centralized mode.

In an embodiment, the communication unit is arranged independently; or the communication unit is integrated into any one of the first converter and the second converter.

In an embodiment, in a case that the new energy system is a photovoltaic power generation system, the first converter is a DC/DC converter, and the second converter is a DC/AC converter or is implemented by a DC/DC converter connected in series with a DC/AC converter; and

in a case that the new energy system is a wind power generation system, the first converter is an AC/DC converter or is implemented by an AC/DC converter connected in series with a DC/DC converter, and the second converter is an AC/AC converter.

In another aspect of the present disclosure, a method for controlling a direct-current coupling hydrogen production system is provided, the method is applied to a communication master or a system controller in the direct-current coupling hydrogen production system according to any one of the above embodiments. The method for controlling a direct-current coupling hydrogen production system includes:

controlling the first converter in the direct-current coupling hydrogen production system to be in a standby state and the second converter to be connected with the power grid through the conversion device and to transmit the power outputted from the new energy system to the power grid, when the direct-current coupling hydrogen production system is started;

performing a maximum power point tracking (MPPT) operation, and determining whether the power outputted from the new energy system in the direct-current coupling hydrogen production system is greater than the preset threshold based on information acquired by the operation;

controlling the second converter to be in a standby state and the first converter to provide power to the hydrogen production electrolyzer system in the direct-current coupling hydrogen production system for hydrogen production, in a case that the power outputted from the new energy system is greater than the preset threshold; and

maintaining the first converter in the standby state and the second converter to be connected with the power grid through the conversion device to transmit the power outputted from the new energy system to the power grid, in a case that the power outputted from the new energy system is less than or equal to the preset threshold.

In an embodiment, the performing an MPPT operation, and determining whether the power outputted from the new energy system in the direct-current coupling hydrogen production system is greater than the preset threshold based on information acquired by the operation includes:

performing the MPPT operation, to determine a power of a maximum power point;

determining whether the power of the maximum power point is greater than the preset threshold; and

determining, if the power of the maximum power point is greater than the preset threshold, that the power outputted from the new energy system is greater than the preset threshold.

In an embodiment, the preset threshold includes a first preset threshold and a second preset threshold, and the first preset threshold is greater than or equal to the second preset threshold; and

the determining whether the power of the maximum power point is greater than the preset threshold includes:

determining whether the power of the maximum power point increases to be greater than the first preset threshold, and does not decrease to be less than the second preset threshold; and

determining that the power of the maximum power point is greater than the preset threshold, if the power of the maximum power point increases to be greater than the first preset threshold, and does not decrease to be less than the second preset threshold.

In an embodiment, in a case that a hydrogen production electrolyzer in the hydrogen production electrolyzer system is an alkaline electrolyzer, the preset threshold is a minimum required power of the alkaline electrolyzer and is equal to a product of a minimum required current and a minimum required voltage of the alkaline electrolyzer; and the determining whether the power of the maximum power point is greater than the preset threshold includes:

calculating a theoretical value of a hydrogen production current of the alkaline electrolyzer based on the power of the maximum power point;

determining whether the theoretical value of the hydrogen production current is greater than the minimum required current of the alkaline electrolyzer; and

determining, in a case that the theoretical value of the hydrogen production current is greater than the minimum required current of the alkaline electrolyzer, that the power of the maximum power point is greater than the preset threshold.

In an embodiment, the theoretical value of the hydrogen production current of the alkaline electrolyzer is calculated based on the power of the maximum power point by using following equations:

$$Uin = U\_limit + (Pmpp * Req)^{1/2}; \text{ and } Iin = Pmpp/Uin,$$

where Uin represents a theoretical value of a hydrogen production voltage of the alkaline electrolyzer, Iin represents the theoretical value of the hydrogen production current of the alkaline electrolyzer, U limit represents the minimum required voltage of the alkaline electrolyzer, Pmpp represents the power of the maximum power point, and Req represents an equivalent resistance of the alkaline electrolyzer.

In an embodiment, in a case that a power output branch of the new energy system is further provided with a controllable switch, before the controlling the first converter in the direct-current coupling hydrogen production system to be in a standby state and the second converter to be connected with the power grid through the conversion device and to transmit the power outputted from the new energy system to the power grid, the method for controlling a direct-current coupling hydrogen production system further includes:
controlling the controllable switch to be turned on.

In an embodiment, in a case that the second converter is a bidirectional converter, and the conversion device is a bidirectional conversion device, the method for controlling a direct-current coupling hydrogen production system further includes:

determining whether the power outputted from the new energy system is less than or equal to a starting threshold and whether a current time instant is within a valley price period of the power grid; and

controlling the controllable switch to be turned off, the second converter to receive power from the power grid through the conversion device and inversely convert the power from the power grid, and the first converter to receive power from the second converter and provide power to the hydrogen production electrolyzer system for hydrogen production, if the power from the new energy system is less than or equal to the starting threshold and the current time instant is within the valley price period of the power grid.

In the direct-current coupling hydrogen production system according to the present disclosure, the first converter provides power to the hydrogen production electrolyzer system for hydrogen production only in a case that the power from the new energy system is greater than the preset threshold. In a case that the electric energy from the new energy system is less than or equal to the preset threshold, the second converter is connected with the power grid and transmit the power outputted from the new energy system to the power grid. Therefore, even if the hydrogen production electrolyzer in the hydrogen production electrolyzer system is the alkaline electrolyzer, based on the principle described above, the maximum utilization of new energy power can be achieved and the minimum current/voltage limits of the alkaline electrolyzer can be met without introducing the battery energy storage, thereby avoiding the problem of poor economy caused by the arrangement of the battery for energy storage.

**BRIEF DESCRIPTION OF THE DRAWINGS**

Figure 1 is a schematic structural diagram of a direct-current coupling grid-disconnected hydrogen production system according to the conventional technology;

Figure 2 is a schematic structural diagram of a direct-current coupling hydrogen production system according to an embodiment of the present disclosure;

Figure 3a is a schematic structural diagram of a direct-current coupling photovoltaic hydrogen production system according to an embodiment of the present disclosure;

Figure 3b is a schematic structural diagram of a direct-current coupling wind power hydrogen production system according to an embodiment of the present disclosure;

Figure 4 is flow chart of a method for controlling a direct-current coupling hydrogen production system according to an embodiment of the present disclosure; and

Figure 5 is flow chart showing partial steps of a method for controlling a direct-current coupling hydrogen production system according to an embodiment of the present disclosure.

**DETAILED DESCRIPTION**

The technical solutions of the embodiments of the present disclosure are described clearly and completely in conjunction with the drawings in the embodiments of the present disclosure hereinafter. It is apparent that the described embodiments are only some rather than all embodiments of the present disclosure. All other embodiments obtained by those skilled in the art based on the embodiments of the present disclosure without any creative work fall within the protection scope of the present disclosure.

A direct-current coupling hydrogen production system is provided according to the present disclosure, to solve the problem of poor system economy caused by the arrangement of the battery for energy storage according to the conventional technology.

Referring to Figure 2, the direct-current coupling hydrogen production system includes a new energy system 101, a first converter 102, a hydrogen production electrolyzer system 104, a second converter 103, a conversion device 105 and a communication unit 106.

The new energy system 101 is connected with the hydrogen production electrolyzer system 104 through the first converter 102. The new energy system 101 is connected with a power grid successively through the second converter 103 and the conversion device 105.

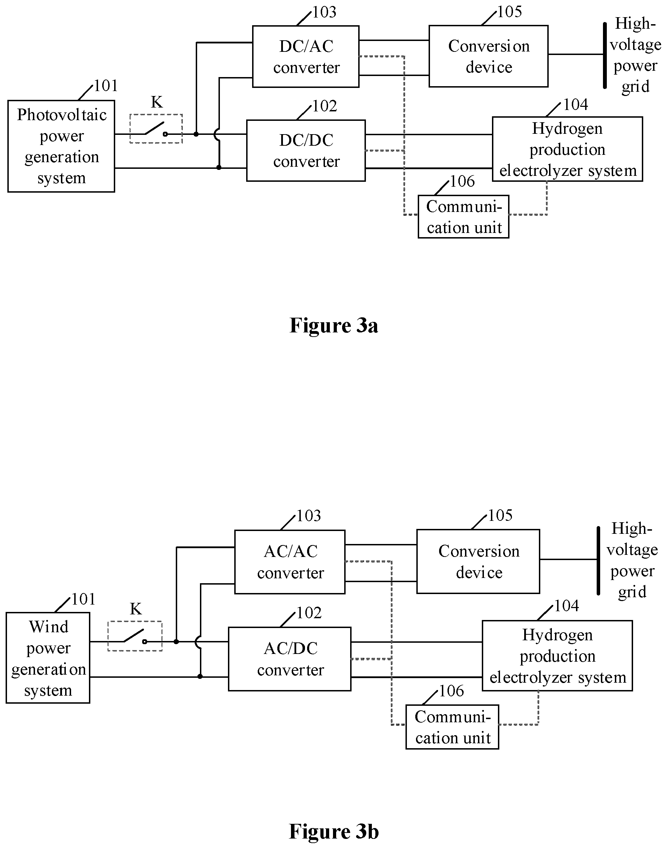

In practices, the new energy system 101 may be a photovoltaic power generation system (as shown in Figure 3a) or a wind power generation system (as shown in Figure 3b).

The photovoltaic power generation system includes one or more photovoltaic strings. The photovoltaic strings are connected in parallel with each other, to form a branch. Two terminals of the branch serve as an output end of the new energy system 101. The photovoltaic string may be formed by photovoltaic modules of various power-levels currently available on the market, to form a photovoltaic system of 1000V voltage-level, a photovoltaic system of 1500V voltage-level or a photovoltaic system of a higher voltage-level. The voltage-level of the photovoltaic system is not limited herein, and depends on the application environment. All these variations fall within the scope of the present disclosure. In a case that the new energy system 101 is the photovoltaic power generation system, as shown in Figure 3a, the first converter 102 is a DC/DC converter, and the second converter 103 is a DC/AC converter or is implemented by a DC/DC converter connected in series with a DC/AC converter. A topology of the DC/DC converter as the first converter 102 may be an isolated topology, a non-isolated topology, a boost topology, a buck topology, a boost/buck topology, a resonant topology, a non-resonant topology, a full-bridge topology, a half-bridge topology, a two-level topology or a three-level topology. The topology of the DC/DC converter is not limited herein, and depends on the application environment. All these alternatives fall within the scope of the present disclosure. A topology of the DC/AC converter in the second converter 103 may be the two-level topology, the three-level topology, the isolated topology, or the non-isolated topology. The topology of the DC/AC converter is not limited herein, and depends on the application environment. All these alternatives fall within the protection scope of the present disclosure.

The wind power generation system includes a wind turbine and a doubly fed induction generator (DFIG) or a permanent magnet synchronous generator (PMSG). The wind turbine outputs power via the DFIG or the PMSG. An output end of the DFIG or the PMSG serves as an output end of the new energy system 101. In a case that the new energy system 101 is the wind power generation system, as shown in Figure 3b, the first converter 102 is an AC/DC converter or is implemented by an AC/DC converter connected in series with a DC/DC converter, and the second converter 103 is an AC/AC converter. A topology of the AC/DC converter may be the isolated topology, the boost topology, the buck topology, the boost/buck topology, the two-level topology, the three-level topology, the full-bridge topology or the half-bridge topology. The topology of the AC /DC converter is not limited herein, and depends on the application environment. All these alternatives fall within the protection scope of the present disclosure.

The conversion device 105 may be a solid-state power electronic transformer or a box-type transformer. The power grid connected with the conversion device 105 is a high-voltage power grid. The high-voltage power grid may be a power grid of 16KV voltage-level or a power grid of 35KV voltage-level. The voltage-level of the high-voltage power grid is not limited herein, and depends on the application environment. All these alternatives fall within the protection scope of the present disclosure.

As shown in Figure 2, the communication unit 106 is in communication connection with the first converter 102, the second converter 103 and the hydrogen production electrolyzer system 104. The communication connection may be implemented in a wired or a wireless manner, which is determined according to practice, and is not limited herein. All these alternatives fall within the scope of the present disclosure. The communication unit 106 may be arranged independently, or may be integrated into any one of the first converter 102 and the second converter 103, which depends on the application environment, and all these alternatives fall within the scope of the present disclosure.

Moreover, the first converter 102 and the second converter 103 in the direct-current coupling hydrogen production system may perform control in a master-slave manner through the communication unit 106. Alternatively, the direct-current coupling hydrogen production system is provided with a system controller connected with the communication unit 106, and the system controller is configured to perform centralized control through the communication unit 106. The adopted control mode depends on the application environment, and all these alternatives fall within the scope of the present disclosure.

The hydrogen production electrolyzer system 104 includes a hydrogen production electrolyzer and a control cabinet. The control cabinet is configured to monitor a state of the hydrogen production electrolyzer, such as a voltage, a temperature and a hydrogen/oxygen liquid level of the hydrogen production electrolyzer, generate a voltage/current command corresponding to the state, and directly or indirectly transmit the voltage/current command to the second converter 103 through the communication unit 106, so that the second converter 103 output power in response to the voltage/current command. The hydrogen production electrolyzer may be any one of an alkaline electrolyzer, a PEM electrolyzer and a solid oxide electrolyzer. The type of the hydrogen production electrolyzer is no limited herein, and depends on the application environment. All these alternatives fall within the scope of the present disclosure.

The operation principle of the direct-current coupling hydrogen production system is as follows.

The direct-current coupling hydrogen production system is controlled to operate in two operation modes considering power fluctuation of the new energy system 101 and the minimum current/voltage limits for producing gas by the alkaline electrolyzer. In a first operation mode, in a case that power outputted from the new energy system 101 is less than or equal to a preset threshold, for example, when the power does not reach the limits of the alkaline electrolyzer, the direct-current coupling hydrogen production system is switched from a hydrogen production mode to a grid-connected mode, that is, the second converter 103 is connected with the power grid through the conversion device 105 and transmits the power from the new energy system 101 to the power grid. In a second operation mode, in a case that the power outputted from the new energy system 101 is greater than the preset threshold, for example, when the power reaches the limits of the alkaline electrolyzer, the direct-current coupling hydrogen production system is switched from the grid-connected mode to the hydrogen production mode, that is, the first converter 102 provides power to the hydrogen production electrolyzer system 104 for hydrogen production.

In a case that the hydrogen production electrolyzer in the hydrogen production electrolyzer system 104 is the alkaline electrolyzer, the preset threshold is a minimum required power of the alkaline electrolyzer.

Taking the alkaline electrolyzer as an example, whether the master-slave manner or the centralized manner is adopted, the direct-current coupling hydrogen production system implements control based on the above principle by following steps. When the direct-current coupling hydrogen production system is started, the second converter 103 first functions and enters the grid-connected mode. One of the first converter and the second converter functioning as a communication master or the system controller determines a power $P_{mpp}$ of a maximum power point based on an MPPT operation, and calculates a theoretical value $U_{in}$ of a hydrogen production voltage of the alkaline electrolyzer by using the equation Uin=U_limit+(Pmpp*Req)$^{1/2}$, and then calculate a theoretical value Iin of a hydrogen production current of the alkaline electrolyzer by using the equation Iin=Pmpp/Uin, where U_limit represents a minimum required voltage of the alkaline electrolyzer, and Req represents an equivalent resistance of the alkaline electrolyzer. Next, the theoretical value Iin of the hydrogen production current of the alkaline electrolyzer is compared with a minimum required current I_limit for gas production by the alkaline electrolyzer. In a case that Iin is greater than I limit, the second converter 103 is switched from the grid-connected mode to a standby mode, the first converter 102 starts to operate and enters the hydrogen production mode to transmit the power from the new energy system 101 to the alkaline electrolyzer for hydrogen production. In a case that Iin is less than or equal to I limit, the first converter 102 is maintained in a standby state and the second converter 103 is maintained in the grid-connected mode. The minimum required current I limit for gas production by the alkaline electrolyzer may be determined according to the actual alkaline electrolyzer system, for example, the minimum required current may equal to 30% rated current or 50% rated current of the alkaline electrolyzer system. The minimum current is not limited herein, and depends on the application environment. All these alternatives fall within the scope of the present disclosure.

It should be noted that the switching between the grid-connected mode and the grid-disconnected mode described above may be based on the same comparison threshold, such as the minimum required current I_limit for gas production by the alkaline electrolyzer. In practices, hysteresis control strategy may alternatively be used for the switching between the grid-connected mode and the grid-disconnected mode. For example, when a current/power increases, a higher comparison threshold is adopted, and when the current/power decreases, a lower comparison threshold is adopted. The switching principle is the same as the above, and is not described in detail herein.

In the direct-current coupling hydrogen production system according to the embodiment, power is provided through the first converter 102 to the hydrogen production electrolyzer system 104 for hydrogen production only when the power outputted from the new energy system 101 is greater than the preset threshold. When the power outputted from the new energy system 101 is less than or equal to the preset threshold, the second converter 103 is connected with the power grid and transmit the power outputted from the new energy system to the power grid. Therefore, even if the hydrogen production electrolyzer in the hydrogen production electrolyzer system 104 is the alkaline electrolyzer, based on the switching principle between the grid-connected mode and the grid-disconnected mode described above, the maximum utilization of new energy power can be achieved and the minimum current/voltage limit of the alkaline electrolyzer can be met without arranging the battery for energy storage, thereby avoiding the problem of poor economy caused by the arrangement of the battery for energy storage. Moreover, the direct-current coupling hydrogen production system has advantages of a simple structure, simple control, reliable operation and easy implementation.

It should be noted that in a case that the new energy system 101 is the photovoltaic power generation system, the photovoltaic module outputs no power at night, and in a case that the new energy system 101 is the wind power generation system, a wind field may experience a windless period. In the above two cases, considering demand of the actual hydrogen production, power from the power grid within a valley price period of the power grid may be used to produce hydrogen. Based on the above embodiment, the second converter 103 of the direct-current coupling hydrogen production system is a bidirectional converter, the conversion device 105 is a bidirectional conversion device 105, and a power output branch of the new energy system 101 is further provided with a controllable switch (as shown K in Figures 2 to 3b). The controllable switch may be a circuit breaker, a contactor or another switching device, which is not limited herein, and depends on the application environment. All these alternatives fall within the scope of the present disclosure.

In a case that the photovoltaic power generation system operates at night or the wind power generation system operates during the windless period, the communication master or the system controller transmits a valley power hydrogen production command via the communication unit 106, to turn off the controllable switch on the electric energy output branch of the new energy system 101, to avoid the damage of photovoltaic modules and other devices caused by power from the power grid flowing back into the new energy system 101. Moreover, the communication master or the system controller further transmits the received voltage/current command of the alkaline electrolyzer to the first converter 102 via the communication unit 106. The second converter 103 operates to rectify and output the power from the power grid. The first converter 102 performs output in response to the received voltage/current command to achieve hydrogen production by using the valley power. Therefore, in a case that the power outputted from the new energy system 101 is less than or equal to a starting threshold and a current time instant is within a valley price period of the power grid, the second converter 103 is further configured to receive the power from the power grid through the conversion device 105 and inversely convert the power from the power grid, and the first converter 102 is further configured to receive power from the second converter 103 and provide power to the hydrogen production electrolyzer system 104 for hydrogen production.

That is, the controllable switch is turned off in the case that the power outputted from the new energy system 101 is less than or equal to the starting threshold and the current time instant is within the valley price period of the power grid. In order to ensure the normal operation of the direct-current coupling hydrogen production system, the controllable switch is turned on in other cases. Therefore, it is required that the communication master or the system controller first transmits a new energy discharging command via the communication unit 106 to turn on the controllable switch on the electric energy output branch of the new energy system 101 when the direct-current coupling hydrogen production system is started, so that the power from the new energy system 101 may be outputted to the first converter 102 or the second converter 103.

In the embodiment, not only the maximum utilization of new energy power can be achieved and the minimum current/voltage limit of the alkaline electrolyzer can be met, but also power from the power grid within the valley price period of the power grid can be used for hydrogen production at night for the photovoltaic power generation system and during the windless period for the wind power generation system, thereby achieving the economy of hydrogen production.

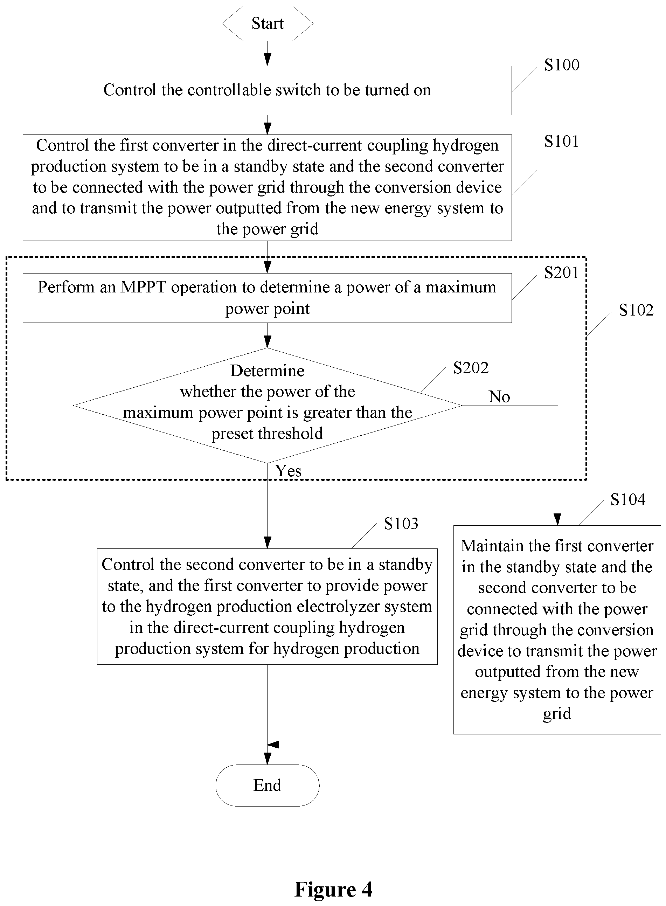

A method for controlling a direct-current coupling hydrogen production system is further provided according to another embodiment of the present disclosure. The method is applied to the communication master or the system controller in the direct-current coupling hydrogen production system according to any one of the embodiments described above. As shown in Figure 4, the method for controlling a direct-current coupling hydrogen production system includes the following steps S101 to S104 that are performed when the direct-current coupling hydrogen production system is started.

In step S101, the first converter in the direct-current coupling hydrogen production system is controlled to be in a standby state, and the second converter is controlled to be connected with the power grid and transmit the power outputted from the new energy system to the power grid.

In step S102, MPPT operation is performed, and it is determined whether the power outputted from the new energy system in the direct-current coupling hydrogen production system is greater than a preset threshold based on information acquired by the operation.

As show in Figure 4, the step S102 includes the following steps S201 and S202.

In step S201, the MPPT operation is performed to determine a power of a maximum power point.

In step S202, it is determined whether the power of the maximum power point is greater than the preset threshold.

In a case that the hydrogen production electrolyzer in the hydrogen production electrolyzer system is the alkaline electrolyzer, the preset threshold is the minimum required power of the alkaline electrolyzer and is equal to the product of the minimum required current and the minimum required voltage of the alkaline electrolyzer. In addition, the step S202 includes the following steps 1 and 2.

In step (1), a theoretical value of a hydrogen production current of the alkaline electrolyzer is calculated based on the power of the maximum power point.

Specifically, a theoretical value $U_{in}$ of a hydrogen production voltage of the alkaline electrolyzer is calculated according to the equation $U_{in} = U\_limit + (P_{mpp}*R_{eq})^{1/2}$, and then a theoretical value $I_{in}$ of a hydrogen production current of the alkaline electrolyzer is calculated according to the equation $I_{in} = P_{mpp}/U_{in}$.

U limit represents the minimum required voltage of the alkaline electrolyzer, $P_{mpp}$ represents the power of the maximum power point, and $R_{eq}$ represents an equivalent resistance of the alkaline electrolyzer.

In step (2), it is determined whether the theoretical value $I_{in}$ of the hydrogen production current is greater than the minimum required current of the alkaline electrolyzer.

The minimum required current of the alkaline electrolyzer is determined according to the actual alkaline electrolyzer. The minimum required current may be equal to 30% rated current, 50% rated current, or other ratios of the rated current, which is not limited herein. All these alternatives fall within the protection scope of the present disclosure.

In a case that the theoretical value of the hydrogen production current is greater than the minimum required current of the alkaline electrolyzer, it is determined that the power of the maximum power point is greater than the preset threshold. In a case that the theoretical value of the hydrogen production current is less than or equal to the minimum required current of the alkaline electrolyzer, it is determined that the power of the maximum power point is less than or equal to the preset threshold.

In practices, the above comparison and determination process may alternatively be implemented by hysteresis control strategy. For example, the preset threshold includes a first preset threshold and a second preset threshold. The first preset threshold is greater than or equal to the second preset threshold. In this case, the step S202 includes: determining whether the power of the maximum power point increases to be greater than the first preset threshold, and does not decrease to be less than the second preset threshold; and determining that the power of the maximum power point is greater than the preset threshold if the power of the maximum power point increases to be greater than the first preset threshold, and does not decrease to be less than the second preset threshold. For the alkaline electrolyzer, it is only required to determine whether the theoretical value of the hydrogen production current meets the minimum required current of the alkaline electrolyzer. The minimum required current may refer to a current after the theoretical value of the hydrogen production current increases to be greater than a first current threshold and before the theoretical value of the hydrogen production current decreases to be less than or equal to a second current threshold. The first current threshold is greater than or equal to the second current threshold, and the second current threshold is greater than or equal to the minimum required current.

If the power of the maximum power point is greater than the preset threshold, it is determined that the power outputted from the new energy system is greater than the preset threshold, and step S103 is performed. If the power of the maximum power point is less than or equal to the preset threshold, it is determined that the power outputted from the new energy system is less than or equal to the preset threshold, and step S104 is performed.

In step S103, the second converter is controlled to be in a standby state, and the first converter is controlled to provide power to the hydrogen production electrolyzer system in the direct-current coupling hydrogen production system for hydrogen production.

In step S104, the first converter is maintained in the standby state and the second converter is maintained to be connected with the power grid to transmit the power outputted from the new energy system to the power grid.

The switching between the grid-connected mode and the grid-disconnected mode can be implemented by the above process, so that the maximum utilization of new energy power can be achieved and the minimum current/voltage limit requirements of the alkaline electrolyzer can be met without arranging the battery for energy storage, thereby avoiding the problem of poor economy caused by the arrangement of the battery for energy storage. Moreover, the direct-current coupling hydrogen production system has advantages of a simple structure, simple control, reliable operation and easy implementation.

In an embodiment, in a case that a power output branch of the new energy system is further provided with a controllable switch, as shown in Figure 4, before step S101, the method for controlling a direct-current coupling hydrogen production system further includes the following step S100.

In step S100, the controllable switch is controlled to be turned on.

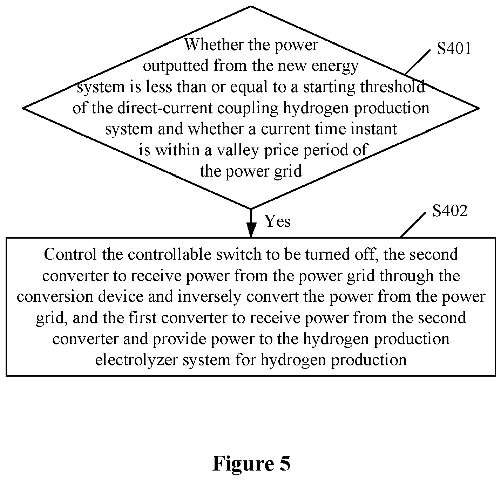

In an embodiment, in a case that the second converter is a bidirectional converter, and the conversion device is a bidirectional conversion device, the method for controlling a direct-current coupling hydrogen production system further includes the following steps S401 and S402 as shown in Figure 5.

In step S401, it is determined whether the power outputted from the new energy system is less than or equal to a starting threshold and whether a current time instant is within a valley price period of the power grid.

If the power from the new energy system is less than or equal to the starting threshold and the current time instant is within the valley price period of the power grid, step S402 is performed.

In step S402, the controllable switch is controlled to be turned off, the second converter is controlled to receive power from the power grid through the conversion device and inversely convert the power from the power grid, and the first converter is controlled to receive power from the second converter and provide power to the hydrogen production electrolyzer system for hydrogen production.

For the structure and the control principle of the direct-current coupling hydrogen production system, reference may be made to any one of the embodiments described above, which is not described redundantly herein.

The embodiments in this specification are described in a progressive way, each of which emphasizes the differences from others, and the same or similar parts among the embodiments can be referred to each other. Since the device disclosed in the embodiments corresponds to the method therein, the description thereof is relatively simple, and for relevant matters references may be made to the description of the method.

The foregoing embodiments are only preferred embodiments of the present disclosure and are not meant to limit the present disclosure. The preferred embodiments according to the present disclosure are disclosed above, and are not intended to limit the present disclosure. Those skilled in the art may make, based on the disclosed method and technical content, some variations and improvements on the technical solutions of the present disclosure, or make some equivalent variations on the embodiments without departing from the scope of the technical solutions. Therefore, simple variants, equivalent changes and modifications made to the above embodiments from the technical essences of the present disclosure without departing from the technical solutions of the present disclosure should fall in the protection scope of the technical solutions of the present disclosure.

## Claims

1. A direct-current coupling hydrogen production system, comprising a new energy system, a first converter, a hydrogen production electrolyzer system, a second converter, a conversion device and a communication unit, wherein

   the new energy system is connected with the hydrogen production electrolyzer system through the first converter, and the new energy system is connected with a power grid successively through the second converter and the conversion device;
   the communication unit is in communication connection with the first converter, the second converter and the hydrogen production electrolyzer system;
   the first converter is configured to provide, in a case that power outputted from the new energy system is greater than a preset threshold, power to the hydrogen production electrolyzer system for hydrogen production; and
   the second converter is configured to, in a case that the power outputted from the new energy system is less than or equal to the preset threshold, be connected with the power grid through the conversion device and transmit the power outputted from the new energy system to the power grid.

2. The direct-current coupling hydrogen production system according to claim 1, wherein

a hydrogen production electrolyzer of the hydrogen production electrolyzer system is any one of an alkaline electrolyzer, a PEM electrolyzer and a solid oxide electrolyzer; and
in a case that the hydrogen production electrolyzer in the hydrogen production electrolyzer system is the alkaline electrolyzer, the preset threshold is a minimum required power of the alkaline electrolyzer.

3. The direct-current coupling hydrogen production system according to claim 1, wherein the second converter is a bidirectional converter, the conversion device is a bidirectional conversion device, and a power output branch of the new energy system is further provided with a controllable switch, wherein

the controllable switch is configured to be turned off in a case that the power outputted from the new energy system is less than or equal to a starting threshold and a current time instant is within a valley price period of the power grid, and to be turned on in cases other than the case that the power outputted from the new energy system is less than or equal to the starting threshold and the current time instant is within the valley price period of the power grid;
the second converter is further configured to receive power from the power grid through the conversion device, and inversely convert the power from the power grid in the case that the power outputted from the new energy system is less than or equal to the starting threshold and the current time instant is within the valley price period of the power grid; and
the first converter is further configured to receive power from the second converter and provide power to the hydrogen production electrolyzer system for hydrogen production in the case that the power outputted from the new energy system is less than or equal to the starting threshold and the current time instant is within the valley price period of the power grid.

4. The direct-current coupling hydrogen production system according to any one of claims 1 to 3, wherein

the first converter and the second converter operate in a master-slave manner; or
the direct-current coupling hydrogen production system further comprises a system controller connected with the communication unit, and the system controller is configured to control the direct-current coupling hydrogen production system in a centralized mode.

5. The direct-current coupling hydrogen production system according to any one of claims 1 to 3, wherein

the communication unit is arranged independently; or
the communication unit is integrated into any one of the first converter and the second converter.

6. The direct-current coupling hydrogen production system according to any one of claims 1 to 3, wherein

in a case that the new energy system is a photovoltaic power generation system, the first converter is a DC/DC converter, and the second converter is a DC/AC converter or is implemented by a DC/DC converter connected in series with a DC/AC converter; and
in a case that the new energy system is a wind power generation system, the first converter is an AC/DC converter or is implemented by an AC/DC converter connected in series with a DC/DC converter, and the second converter is an AC/AC converter.

7. A method for controlling a direct-current coupling hydrogen production system, applied to a communication master or a system controller in the direct-current coupling hydrogen production system according to any one of claims 1 to 6, the method for controlling a direct-current coupling hydrogen production system comprising:

controlling the first converter in the direct-current coupling hydrogen production system to be in a standby state and the second converter to be connected with the power grid through the conversion device and to transmit the power outputted from the new energy system to the power grid, when the direct-current coupling hydrogen production system is started;
performing a maximum power point tracking, MPPT, operation, and determining whether the power outputted from the new energy system in the direct-current coupling hydrogen production system is greater than the preset threshold based on information acquired by the operation;
controlling the second converter to be in a standby state and the first converter to provide power to the hydrogen production electrolyzer system in the direct-current coupling hydrogen production system for hydrogen production, in a case that the power outputted from the new energy system is greater than the preset threshold; and maintaining the first converter in the standby state and the second converter to be connected with the power grid through the conversion device to transmit the power outputted from the new energy system to the power grid, in a case that the power outputted from the new energy system is less than or equal to the preset threshold.

8. The method for controlling a direct-current coupling hydrogen production system according to claim 7, wherein the performing a maximum power point tracking, MPPT, operation, and determining whether the power outputted from the new energy system in the direct-current coupling hydrogen production system is greater than the preset threshold based on information acquired by the operation comprises:

performing the MPPT operation, to determine a power of a maximum power point;
determining whether the power of the maximum power point is greater than the preset threshold; and
determining, if the power of the maximum power point is greater than the preset threshold, that the power outputted from the new energy system is greater than the preset threshold.

9. The method for controlling a direct-current coupling hydrogen production system according to claim 8, wherein the preset threshold comprises a first preset threshold and a second preset threshold, and the first preset threshold is greater than or equal to the second preset threshold; and the determining whether the power of the maximum power point is greater than the preset threshold comprises:

determining whether the power of the maximum power point increases to be greater than the first preset threshold, and does not decrease to be less than the second preset threshold; and
determining that the power of the maximum power point is greater than the preset threshold, if the power of the maximum power point increases to be greater than the first preset threshold, and does not decrease to be less than the second preset threshold.

10. The method for controlling a direct-current coupling hydrogen production system according to claim 8, wherein

in a case that a hydrogen production electrolyzer in the hydrogen production electrolyzer system is an alkaline electrolyzer, the preset threshold is a minimum required power of the alkaline electrolyzer and is equal to a product of a minimum required current and a minimum required voltage of the alkaline electrolyzer; and
the determining whether the power of the maximum power point is greater than the preset threshold comprises:

calculating a theoretical value of a hydrogen production current of the alkaline electrolyzer based on the power of the maximum power point;
determining whether the theoretical value of the hydrogen production current is greater than the minimum required current of the alkaline electrolyzer; and
determining, in a case that the theoretical value of the hydrogen production current is greater than the minimum required current of the alkaline electrolyzer, that the power of the maximum power point is greater than the preset threshold.

11. The method for controlling a direct-current coupling hydrogen production system according to claim 10, wherein the theoretical value of the hydrogen production current of the alkaline electrolyzer is calculated based on the power of the maximum power point by using following equations:

$$Uin = U\_limit + (Pmpp * Req)^{1/2};$$

and

$$Iin = Pmpp/Uin,$$

where Uin represents a theoretical value of a hydrogen production voltage of the alkaline electrolyzer, Iin represents the theoretical value of the hydrogen production current of the alkaline electrolyzer, U_limit represents the minimum required voltage of the alkaline electrolyzer, Pmpp represents the power of the maximum power point, and Req represents an equivalent resistance of the alkaline electrolyzer.

12. The method for controlling a direct-current coupling hydrogen production system according to any one of claims 7 to 11, wherein
in a case that a power output branch of the new energy system is further provided with a controllable switch, before the controlling the first converter in the direct-current coupling hydrogen production system to be in a standby state and the second converter to be connected with the power grid through the conversion device and to transmit the power outputted from the new energy system to the power grid, the method for controlling a direct-current coupling hydrogen production system further comprises:
controlling the controllable switch to be turned on.

13. The method for controlling a direct-current coupling hydrogen production system according to claim 12, wherein in a case that the second converter is a bidirectional converter, and the conversion device is a bidirectional conversion device, the method for controlling a direct-current coupling hydrogen production system further comprises:

determining whether the power outputted from the new energy system is less than or equal to a starting threshold and whether a current time instant is within a valley price period of the power grid; and
controlling the controllable switch to be turned off, the second converter to receive power from the power grid through the conversion device and inversely convert the power from the power grid, and the first converter to receive power from the second converter and provide power to the hydrogen production electrolyzer system for hydrogen production, if the power from the new energy system is less than or equal to the starting threshold and the current time instant is within the valley price period of the power grid.

| PV system | | DC/DC converter | | Hydrogen production electrolyzer system | | Hydrogen storage system/ Oxygen storage system |
|---|---|---|---|---|---|---|
| Wind turbine system | | AC/DC converter | | | | |

**Figure 1**

**Figure 2**

**Figure 3a**

**Figure 3b**

Start

Control the controllable switch to be turned on — S100

Control the first converter in the direct-current coupling hydrogen production system to be in a standby state and the second converter to be connected with the power grid through the conversion device and to transmit the power outputted from the new energy system to the power grid — S101

Perform an MPPT operation to determine a power of a maximum power point — S201

S102

Determine whether the power of the maximum power point is greater than the preset threshold — S202

No

Yes

Control the second converter to be in a standby state, and the first converter to provide power to the hydrogen production electrolyzer system in the direct-current coupling hydrogen production system for hydrogen production — S103

Maintain the first converter in the standby state and the second converter to be connected with the power grid through the conversion device to transmit the power outputted from the new energy system to the power grid — S104

End

**Figure 4**

Whether the power outputted from the new energy system is less than or equal to a starting threshold of the direct-current coupling hydrogen production system and whether a current time instant is within a valley price period of the power grid — S401

Yes

S402

Control the controllable switch to be turned off, the second converter to receive power from the power grid through the conversion device and inversely convert the power from the power grid, and the first converter to receive power from the second converter and provide power to the hydrogen production electrolyzer system for hydrogen production

**Figure 5**

## INTERNATIONAL SEARCH REPORT

| | International application No. |
|---|---|
| | **PCT/CN2020/093091** |

**A.    CLASSIFICATION OF SUBJECT MATTER**

H02J 3/38(2006.01)i

According to International Patent Classification (IPC) or to both national classification and IPC

**B.    FIELDS SEARCHED**

Minimum documentation searched (classification system followed by classification symbols)

H02J3; C25B1; C25B9

Documentation searched other than minimum documentation to the extent that such documents are included in the fields searched

Electronic data base consulted during the international search (name of data base and, where practicable, search terms used)

database: CNABS; CNTXT; DWPI; SIPOABS; CNKI search terms: 电解, 制氢, 并网, 入网, 离网, 电网, 电力, 市电, 新能源, 再生, 光, 风, 大于, 小于, 功率, 能量, 输出; hydrogen, electrolyte, grid, renewable, regenerable, reproducible, photovoltaic, wind, more than, greater than, exceed, less than, smaller than, output, power

**C.    DOCUMENTS CONSIDERED TO BE RELEVANT**

| Category* | Citation of document, with indication, where appropriate, of the relevant passages | Relevant to claim No. |
|---|---|---|
| Y | CN 109286205 A (HEBEI UNIVERSITY OF TECHNOLOGY) 29 January 2019 (2019-01-29) description, paragraphs [0026]-[0040], and figures 1 and 2 | 1-13 |
| Y | CN 108517533 A (GLOBAL ENERGY INTERCONNECTION RESEARCH INSTITUTE CO., LTD. et al.) 11 September 2018 (2018-09-11) description paragraphs [0041]-[0043], [0098] | 1-13 |
| Y | CN 202001202 U (GUODIAN UNITED POWER TECHNOLOGY CO., LTD.) 05 October 2011 (2011-10-05) description paragraphs [0016], [0017], figure 3 | 3-13 |
| Y | CN 109004665 A (HEBEI UNIVERSITY OF SCIENCE AND TECHNOLOGY) 14 December 2018 (2018-12-14) description paragraphs [0039]-[0045], figures 1, 5 | 1-13 |
| A | JP 2017034843 A (TOKYO KIKAI SEISAKUSHO LTD) 09 February 2017 (2017-02-09) entire document | 1-13 |
| A | DE 102013112431 A1 (AEG POWER SOLUTIONS BV) 05 June 2014 (2014-06-05) entire document | 1-13 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 August 2020** | **27 August 2020** |

| Name and mailing address of the ISA/CN | Authorized officer |
|---|---|
| **China National Intellectual Property Administration (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2020/093091**

| Patent document cited in search report | | | Publication date (day/month/year) | Patent family member(s) | Publication date (day/month/year) |
|---|---|---|---|---|---|
| CN | 109286205 | A | 29 January 2019 | None | |
| CN | 108517533 | A | 11 September 2018 | None | |
| CN | 202001202 | U | 05 October 2011 | None | |
| CN | 109004665 | A | 14 December 2018 | None | |
| JP | 2017034843 | A | 09 February 2017 | None | |
| DE | 102013112431 | A1 | 05 June 2014 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911031338